Europäisches Patentamt

European Patent Office

Office européen des brevets

(11) Publication number: **0 391 358 B1**

# EUROPEAN PATENT SPECIFICATION

(45) Date of publication of patent specification: **15.12.93**

(51) Int. Cl.5: **A22C 13/00**, A23B 4/044, B65B 11/14

(21) Application number: **90106379.2**

(22) Date of filing: **03.04.90**

(54) Smoked food-package and smoking process.

(30) Priority: **04.04.89 JP 85455/89**

(43) Date of publication of application:
**10.10.90 Bulletin 90/41**

(45) Publication of the grant of the patent:
**15.12.93 Bulletin 93/50**

(84) Designated Contracting States:
**DE FR GB NL SE**

(56) References cited:
**EP-A- 0 216 094**
**EP-B- 0 076 436**
**EP-B- 0 248 585**
**GB-A- 0 397 472**
**US-A- 4 755 402**

Chemical Abstracts, vol. 104, no. 15, April 14, 1986, Colombus, Ohio, USA, Kusumi et al.: "Smokable film for sausage and ham manufacture", abstract no. 128 645x

(73) Proprietor: **KUREHA KAGAKU KOGYO KABUSHIKI KAISHA**
**1-9-11, Nihonbashi, Horidome-cho**
**Chuo-ku Tokyo 103(JP)**

(72) Inventor: **Hisazumi, Nobuyuki**
**3-11-9 Minato-machi**
**Tsuchiura-shi, Ibaraki-ken(JP)**
Inventor: **Uehara, Tsutomu**
**4920-1 Oaza Kidamari**
**Tsuchiura-shi, Ibaraki-ken(JP)**
Inventor: **Ohba, Hiroyuki**
**3671 Oaza Shimoinayoshi,**
**Chiyoda-mura**
**Niihari-gun, Ibaraki-ken(JP)**
Inventor: **Hirose, Kazuhiko**
**38-3-206 Izumi**
**Abiko-shi, Chiba-ken(JP)**

(74) Representative: **TER MEER - MÜLLER - STEIN-MEISTER & PARTNER**
**Mauerkircherstrasse 45**
**D-81679 München (DE)**

Chemical Abstracts, vol. 111, no. 9, August 28, 1989, Colombus, Ohio, USA, Nishino et al. "Smoking of foods using packaging films based on alpha-olefin-vinyl alcohol copolymer-polyamide mixtures", Abstract no. 76 743a

Chemical Abstracts, vol. 111, no. 9, August 28, 1989, Colombus, Ohio, USA, Nishino et al. "Smoking of foods using packaging films based on alpha-olefin-vinyl alcohol copolymer-polyamide mixtures", Abstract no. 76 740x

Chemical Abstracts, vol. 111, no. 9, August 28, 1989, Colombus, Ohio, USA, Nishino et al. "Smoking of foods using packaging films based on alpha-olefin-vinyl alcohol copolymer-polyamide mixtures, Abstract no. 76 745c

Chemical Abstracts, vol. 108, no. 18, May 2, 1988, Colombus, Ohio, USA, Kusumi et al. "Smokable gas-barier films food packaging", Abstract no. 151 839e

## Description

## BACKGROUND OF THE INVENTION:

The present invention relates to a smoked food package and a smoking process. Further this invention particularly relates to a smoked food package which is excellent in smokability, oxygen-barrier property and water vapor barrier property and has preserving effect without secondary-packaging with plastic bags, and which also is produced by packaging a foodstuff with a smokable film and smoking the packaged foodstuff wherein the smokable film comprises at least one layer of a mixture of 20 to 40% by weight vinylidene chloride resin (hereinafter referred to as PVDC) and 60 to 80% by weight of polyamide.

Hitherto, the packages for foodstuffs such as processed meat which is to be smoked is mainly conducted by primary packaging and secondary packaging. For primary packaging, a packaging material is selected so that it is suitable for forming and maintaining the shape of foodstuffs which are packed directly into the packaging material, and for rapidly permeating smoke components during the smoking process. As examples of packaging materials used for primary packaging, casings made from animal intestines such as those of cows, pigs, or sheep, and cellulose casings made of viscose film may be mentioned. These smokable primary packaging materials, however, lack gas-barrier properties and are unsuitable as packaging materials for ordinary food-storage. Therefore, it is necessary to package the foodstuffs again in a film which has a gas-barrier property (secondary packaging).

Other known smokable primary packaging materials are films of natural polymer such as collagens, chitins and polysaccharides, or paper which is impregnated with a polyvinyl alcohol resin [Japanese Patent Publication No. 57-43198(1972)], paper impregnated with an ethylene-vinyl alcohol copolymer containing a plasticizer [Japanese Patent Application Laid-Open (KOKAI) No. 52-57347(1977)], and polyester copolymer films containing polyalkylene oxide [Japanese Patent Publication No. 59-117530(1984)]. These smokable primary packaging materials also have insufficient gas-barrier property, and thus necessitate a secondary packaging for the preservation of the food. Although films which are mechanically perforated or porous films have been proposed in order to improve the smoking properties (British Patent No. 1,397,472), these packaging materials also necessitate secondary packaging. Thus, conventional smokable packaging materials require a secondary packaging process, and as a result there are defects of the increases of the number of manufacturing steps, packaging materials, and packaging machines, and thus increase the manufacturing cost.

As known films having both smoke-permeability and oxygen gas-barrier property, there are films of polyamides such as polycaprolactam and of polymer blends of polyamide and at least one of ionomer resin, modified ethylene-vinyl acetate copolymer and modified polyolefin (European Patent Application No. 0,139,888 A1).

European Patent Application No. 0,139,888 A1 suggests that films consisting of polyamides which can absorb at least 3 wt% of their own weight of water up to the saturation point, such as, for example, polycaprolactam, polyamino-oenanthic acid amide, polyhexamethylene adipamide and polyhexamethylene sebacamide, and films consisting of polymer blends of polyamides such as those described above, and at least one of ionomer, resin modified ethylene-vinyl acetate copolymer and modified polyolefin, are useful as smokable thermoplastic synthetic casings. However, the only films that are concretely disclosed therein are transparent, colorless shrinkable casings formed of polycaprolactam or polyhexamethylene adipamide. The casings of polycaprolactam and polyhexamethylene adipamide show an insufficient oxygen barrier property under high humidity and an insufficient water vapor barrier property.

On the other hand, European Patent Application No. 0,216,094A1 (USP 4,851,245) discloses a smokable food-packaging film comprising at least one layer of a mixture of 50 to 90 wt% polyamide and 10 to 50 wt% copolymer of $\alpha$-olefin and vinyl alcohol, which has the properties of a permeability to 50% concentration methanol of not less than 3.3 x $10^{-6}$ kg$\bullet$m$^{-2}\bullet$sec$^{-1}$ (200 g/m$^2$.day) atm at a temperature of 60°C and a relative humidity of 0% and an oxygen gas-permeability of not more than 5.7 x $10^{-13}$m$^3\bullet$m$^{-2}\bullet$sec$^{-1}\bullet$Pa$^{-1}$ (50 cc/m$^2\bullet$day.atm) at a temperature of 30°C and a relative humidity of 60%. However, the water vapor barrier property of this film is not always sufficient for every use.

When the oxygen barrier property is insufficient, the prolonged storage periods of foods, in particular, for foodstuffs which are susceptible to oxygen becomes inadequate.

Further, in the case of the water vapor barrier property is insufficient, the water content of product decreases during preservation and distribution of the product, the weight of product decreases too, and such quality as taste, color or size changes. In the result, wrinkles in package occur and the product value diminishes.

Accordingly, it is an object of the present invention to provide a smoked food package which has an excellent smokability, a high oxygen barrier property and a high water vapor barrier property and which can preserve a food stuff susceptible to oxygen for along time by packaging a food stuff with a thermoplastic resin having an excellent smokability, oxygen barrier property and water vapor barrier property.

As a result of various studies into how to achieve this object, the present inventors found that the packaging material obtained from a resin mixture of PVDC and polyamide mixed in a specified ratio can attain this object.

**BRIEF DESCRIPTION OF THE DRAWING**

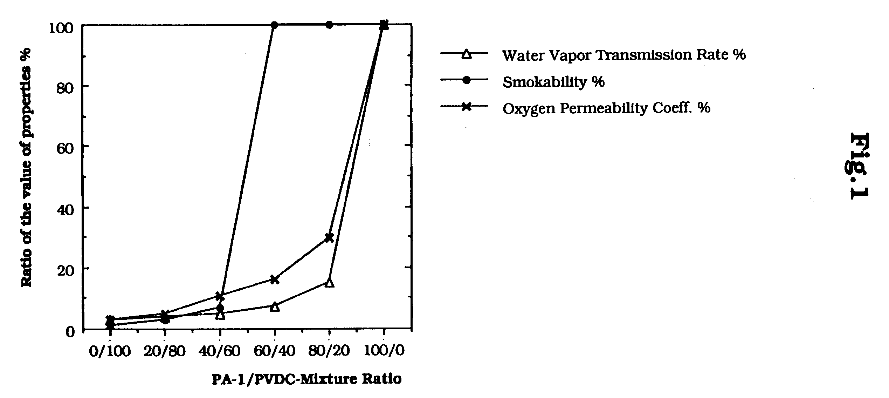

**Fig. 1** shows the relation of the mixture ratio of PVDC and PA-1 and each properties of the mixture having the mixture ratio. The mixture ratio is shown on the abscissa and the ratio of properties of each mixture for the properties of PA-1 shown as 100% are shown on the ordinate.

(1) smokability -●-
(2) water vapor transmission rate -△-
(3) oxygen permeability coefficient -x-

**SUMMARY OF THE INVENTION**

In the first aspect of the present invention, there is provided a smoked food package which is produced by packaging a foodstuff with a smokable packaging material comprising at least one layer of a mixture of 20 to 40% by weight of PVDC, which is a copolymer of 65 to 98% by weight of vinylidene chloride with 2 to 35% by weight of at least one copolymerizable monomer, and 60 to 80% by weight of polyamide having a low crystalline melting point of not higher than 210°C and smoking the packaged foodstuff.

In the second aspect of the present invention, there is provided a smoked food package which is produced as described above, wherein said layer has an oxygen permeability coefficient of not more than $1.5 \times 10^{-18}\,m^3 \cdot m \cdot m^{-2} \cdot sec^{-1} \cdot Pa^-$ ($2.0 \times 10^{-11}$ cc.cm/cm$^2$.sec.cmHg) at a temperature of 30°C and a relative humidity of 100%, and a water vapor transmission rate at a thickness of 30 $\mu$m of not more than $1.16 \times 10^{-6}\,kg \cdot m^{-2} \cdot sec^{-1}$ (100g/m$^2 \cdot$ day) at a temperature of 40°C and relative humidity of 90%, and smoking the packaged foodstuff.

In the third aspect of the present invention there is provided a smoked food package which is produced by packaging a food stuff with a smokable film, sheet or container comprising at least one layer of a mixture as defined above and smoking the packaged food stuff.

In the fourth aspect of the present invention there is provided a smoking process comprising packaging a foodstuff with an above-described smokable packaging material and smoking the packaged foodstuff.

**DETAILED DESCRIPTION OF THE INVENTION**

The smoked food package according to the present invention is a smoked package produced by packaging a foodstuff with a smokable packaging material which comprises at least one layer a mixture as defined above, said layer having an excellent smokability and gas barrier properties, and smoking the packaged foodstuff.

The resin composition of the present invention comprises 20 to 40% by weight of PVDC and 60 to 80% by weight of a polyamide.

As PVDC used in the present invention, a copolymer of 65 to 98% by weight of vinylidene chloride with 2 to 35% by weight of at least one monomer copolymerizable with vinylidene chloride is used. As the monomer copolymerizable with vinylidene chloride, for instance, a monomer selected from the group consisting of vinyl chloride, acrylonitrile, alkyl acrylate (the carbon number in the alkyl group being 1 to 18), alkyl methacrylate (the carbon number in the alkyl group being 1 to 18), acrylic acid, methacrylic acid, etc. is preferable. In the case where the amount of vinylidene chloride is less than 65% by weight, the copolymer becomes rubbery at normal temperature and is poor in gas-barrier property. On the other hand, in the case where the amount of vinylidene chloride is more than 98% by weight, the melting point of the copolymer becomes high and the copolymer is apt to decompose thermally and a stable melt-extruding becomes difficult.

A small amount of a plasticizer, a stabilizer, a lubricant, an antioxidant, and a pigment can be added to the PVDC as required.

As the polyamide mixed with PVDC, a polyamide having a low crystalline melting point of not higher than 210°C, preferably not higher than 200°C, is used. The crystalline melting point of the polyamide in

4

EP 0 391 358 B1

the present invention is shown by the temperature showing the maximum value on the melting curve obtained when 8 to 10 mg of the resin is heated at a temperature-raising speed of 20°C/min while using a differential scanning calorimeter (made by Mettler Co. model TA-3000).

As the monomer constituting the polyamide, for instance, a straight chain $\omega$-aminocarboxylic acid of a carbon number of $C_6$ to $C_{12}$, the lactam thereof, adipic acid, sebacic acid, dodecanedicarboxylic acid, heptadecanedicarboxylic acid, hexamethylenediamine, isophthalic acid, bis-(4-aminocyclohexyl)-methane, 2,2-bis-(4'-aminocyclohexyl)-propane, terephthalic acid or the dimethyl ester thereof, 1.6-diamino-2,2,4-trimethyl-hexane, 1,6-diamino-2,4,4-trimethylhexane, 1-amino-3-amino-methyl-3,6,5-trimethylcyclohexane, etc. are preferable, and polymers, copolymers and the mixtures thereof formed from the above-mentioned monomer can be used. Among these products, nylon 6-66(copolymer of nylon 6 and nylon 66), nylon 6-69-(copolymer of nylon 6 and nylon 69), nylon 6-11(copolymer of nylon 6 and nylon 11), nylon 11, nylon 12, nylon 6-12, nylon 6-66-610(copolymer of nylon 6, nylon 66 and nylon 610), nylon 6-66-610-612(copolymer of nylon 6, nylon 66, nylon 610 and nylon 612), etc. is suitable.

In the case where a polyamide having a crystalline melting point of higher than 210°C is mixed with PVDC, the extruding temperature becomes high in the melt-extruding of the resin composition and PVDC is apt to decompose thermally and a stable melt-extruding becomes difficult.

As the mixture ratio of PVDC and polyamide, 20 to 40% by weight, preferably 25 to 40% by weight of PVDC and 60 to 80% by weight, preferably 60 to 75% by weight of polyamide are used.

In the case where the content of PVDC in the resin composition of the present invention is not more than 20% by weight, the oxygen permeability coefficient and the water vapour transmission rate becomes large resulting in a poor gas-barrier property and it becomes difficult to preserve the food stuff packaged for the long time. On the other hand, in the case where the content of polyamide is less than 60% by weight, the smokability also lowers and it becomes difficult to obtain a smokable food packaging material having the properties of the present invention.

The mixed composition of PVDC and a polyamide of the present invention is melt-molded into films, sheets, or is injection molded or blow molded into bottle or container etc. Further these film and sheet can be molded to a container by deep drawing or compression-molding etc.

The films, sheets or containers may be stretched and not stretched. The molded product may be the product containing at least one layer comprising the thus formed composition, and it is possible to laminate the layer with the other resin layers in the range of not to impede the object of the present invention. As the resin for forming the other resin layer, polyolefins such as polyethylene, polypropylene, ethylene-propylene copolymer, ethylene-vinylacetate copolymer, ethylene-acrylic acid copolymer, ethylene-ethylacrylate copolymer etc., ionomers, polyesters such as polyethylene-terephthalate, polybutylene-terephthalate etc., polyamides, polycabonates, polyvinylalcohol, saponified ethylene-vinylacetate copolymers, cellophane etc. may be mentioned.

The thickness of the smokable food-packaging film or container according to the present invention is preferably 10 to 150 $\mu$m, more preferably 15 to 100 $\mu$m. In a laminate structure, the thickness of the mixed resin layer having a mixture of PVDC and polyamide is preferably 5 to 100 $\mu$m, and the thickness of the other layer(s) is preferably 5 to 140 $\mu$m,

The packaging material comprising at least one layer of a mixture of PVDC and polyamide has a practical smokability.

It is necessary that the film has oxygen barrier property which is exhibited by an oxygen permeability coefficient of less than a predetermined value, in order to preserve the smoked food for long periods. The oxygen permeability coefficient of a film according to the present invention is not more than 1.5 x $10^{-18} m^3 \cdot m \cdot m^{-2} \cdot sec^{-1} \cdot Pa^{-1}$ (2.0 x $10^{-11}$ cc.cm/cm$^2$.sec.cmHg), preferably not more than 1.2 x $10^{-18} m^3 \cdot m \cdot m^{-2} \cdot sec^{-1} \cdot Pa^{-1}$ (1.5 x $10^{-11}$ cc.cm/cm$^2$.sec.cmHg), more preferably 7.5 x $10^{-19} \cdot m^3 \cdot m \cdot m^{-2} \cdot sec^{-1} \cdot Pa^{-1}$) (1.0 x $10^{-11}$cc.cm/cm$^2$.sec.cmHg) at a temperature of 30°C and a relative humidity of 100%. Although ordinary food does not need secondary packaging if it is packaged with a film having an oxygen permeability of more than 1.5 x $10^{-18} m^3 \cdot m \cdot m^{-2} \cdot sec^{-1} \cdot Pa^{-1}$ (2.0 x $10^{-11}$ cc.cm/cm$^2$.sec.cmHg), food which is particularly susceptible to oxygen cannot be preserved for long periods in such a film, so that secondary packaging is necessary.

Further, the water vapor transmission rate of the packaging material of 30 $\mu$m in thickness is not more than 1.16 x $10^{-6} kg \cdot m^{-2} \cdot sec^{-1}$ (100g/m$^2$·day), preferably not more than 9.3 x $10^{-7} kg \cdot m^{-2} \cdot sec^{-1}$ (80 g/m$^2$·day), at a temperature of 40°C and a relative humidity of 90%.

In the case of the water vapor transmission rate of over 1.16 x $10^{-6} kg \cdot m^{-2} \cdot sec^{-1}$ (100 g/m$^2$·day), the water content of product decreases during preservation and distribution of product after smoking treatment, the weight of product decreases too, and such product quality as taste, color or size changes. In the result, wrinkles in package occur and the product value diminishes.

5

The inventors investigated the properties off films which are prepared from the mixed resin of polyamide and PVDC, by changing the mixture ratio of polyamide and PVDC. Film samples having a same thickness were prepared from polyamide and the resin having a variety of mixture ratios of polyamide and PVDC respectively. Pork sausages (non-smoked) were prepared by using these films as casing according to an ordinary method and were smoked at the same condition.

The smokabilities of the thus obtained smoked sausages were evaluated with a sensory test by panelists. In the result, it was surprisingly found that when the ratio of PVDC was below 40% by weight, the smokability of the mixture was not inferior to that of polyamide and when the ratio of PVDC was above 40% by weight, the smokability remarkably decreased.

In the scope of mixture ratio of the present invention, the packaging material has an equal smokability to that of polyamide and an excellent oxygen gas barrier property, water vapor barrier property. Accordingly the smoked food package of the present invention obtained by packaging foodstuff with the packaging material and smoking can be preserved for a long time without a secondary package.

Foodstuffs which are to be packaged in the food-package according to the present invention have need of a smoking process and a good preservability during prolonged storage periods. Meat products such as ham, sausages, bacon and meat, dairy products such as cheese, processed fish meet products such as fish and shellfish, and processed eggs may be exemplified.

The smoked food package according to the present invention is manufactured by packaging foodstuffs with above-mentioned packaging material in the ordinary process.

In the smoking process in the present invention, a package which is formed in an ordinary packaging process and optionally is dried, is placed in smoke chamber for a predetermined period (the period depends upon the food being smoked and is from several minutes to several hours), at a temperature of 15 to 80°C. The smoking temperature can be selected to be 15 to 30°C (cold-smoking method), 30 to 50°C (warm-smoking method), or 50 to 80°C (hot-smoking method), but warm smoking and hot smoking methods which are capable of mass-production at a high temperature in a short period of time are preferable. The smoking may be conducted by an electrical smoking method in which an electric field is applied to an atmosphere of smoke of a hard wood such as oak and cherry wood,in an ordinary way.

The smoked food package according to the present invention is produced by packaging foodstuffs with the packaging material having at least a layer comprising the mixture of PVDC and polyamide of a specified ratio, Therefore, the smoked food package can have a practical smokability, high oxygen barrier property and high water vapor barrier property. In the result, even foodstuff which is susceptible to oxygen, for example, ham, sausage, bacon, meat and cheese etc. can be preserved for a long time after the smoking treatment without a secondary package. Further, because the smoked food package according to the present invention has an excellent water vapor barrier property, the water content of the product scarcely decreases for a long time of preservation and in the result the smokable food package having a wrinkle-less excellent appearance can be obtained.

The present invention will be explained hereunder with reference to embodiments thereof.

A sensory test of smokability (taste and flavor) was carried out as follows.

**i) Panelists (total: ten persons:**

Two men and two women in their twenties, two men and two women in their thirties and one man and one woman in their fifties.

**ii) Standard Test**

Preparation of a standard smoked foods.

Polyamide (PA-1) which has a crystalline melting point of 130°C, and is a copolymer of 50% by weight of the monomer component of nylon 6 and 50% by weight of the monomer component of nylon 12 and PVDC (PVDC-1) which is a copolymer of 80% by weight of vinylidene chloride and 20% by weight of vinyl chloride were melt extruded from an extruder provided with a circular die and were rapidly chilled with water at 15°C, respectively. The thus obtained tubular parisons were stretched by an ordinary inflation method at the ratio of lengthwise direction (MD)/breadthwise direction (TD) = 2.5/2.5, thereby a stretched films of 30 $\mu$m in thickness was obtained.

The respective tubular films were filled with about 20g of pork sausage meat of 50 wt% pork. 20 wt% fat, 60 wt% starch, 2 wt% salt and 22 wt% water, and both ends of each sausage were clipped. Each sausage package was dried in a smoke chamber for 15 minutes at a temperature of 60°C and a relative humidity of 20% and was thereafter smoked for 30 minutes at a temperature of 75°C and a relative humidity of 50%. After the smoking process, each content was taken out from package and cut in a small block of about 5mm square. The sausage taken out from PVDC-1 casing (100%, S5) was mixed to the sausage taken out from PA-1 casing (0%, S1) in a ratio of 25% (S2), 50% (S3) and 75% (S4) by weight respectively. Thus, the five sausages of(S1), (S2), (S3), (S4) and (S5) were prepared and placed on dishes attached with cards marked with respective mixture ratio.

### iii) Panel test of standard smoked foods

The above-mentioned standard smoked foods were tasted by 10 panelists and the taste and flavor were rated. The rating is based on that the sausage (S1) taken out from PA-1 is evaluated as 100 points and the sausage (55) taken out from PVDC-1 is evaluated as 0 point.

The result of rating is as follows

|         | S1    | S2 | S3 | S4 | S5  |
|---------|-------|----|----|----|-----|
| Points: | (100) | 98 | 38 | 10 | (0) |

### iv) the evaluation of smokability test

The smoked food samples to evaluate were tasted by the above mentioned 10 panelists while comparing with the above mentioned standard smoked foods of S1-S5, thereafter the standard smoked food:most similar in taste and flavor to the sample was elected from S1-S5 and one of S1-S5 was marked as smokability of the sample. The result is numerized according to the following procedure.

From the results of the panel test of standard smoked food, the loading factor (Kj) for S1-S5 (Sj) is decided as follows

| Sj | Kj  |
|----|-----|
| S1 | 100 |
| S2 | 98  |
| S3 | 38  |
| S4 | 10  |
| S5 | 0   |

The value of smokability is calculated with the following formula (1) when panelists who evaluate as Sj in the result of the taste test are Nj persons.

Smokability of the sample:

$$\mathbf{Smokability} = \sum^{j}(Kj \times Nj) / \sum^{j} Nj$$

Values below a decimal point are deleted.

### Examples 1-4, Comparative examples 1-8

Polyamide (made by EMS CHEMIE AG Co., Grilon® CF6S) which is a copolymer of the monomer components of Nylon 6 and Nylon 12, has a crystalline melting point of 130°C and glass transition temperature of 30°C and PVDC (PVDC-1) which is a copolymer of 80% by weight of vinylidene chloride and 20% by weight of vinyl chloride were mixed in the weight ratio as shown in Table 2.

Afterward, the mixed resin was melt extruded from an extruder provided with a circular die and was rapidly chilled with water at 15°C. The thus obtained tubular parison was heated and air was blown into the parison immediately to inflation-stretch the parison at the ratio of lengthwise direction (MD)/breadthwise direction (TD) = 2.5/2.5, thereby a stretched film of 30 $\mu$m in thickness was obtained (examples 1-2, comparative example 7).

The oxygen-permeability coefficient at a temperature of 30°C and the relative humidity of 100% of the films of examples 1-2 and comparative example 7 were measured according to ASTM D-3985. Further, the water vapor transmission rate at a temperature of 40°C and a relative humidity of 90% was determined according to JIS Z-0208.

The results obtained are shown in Table 2. The tubular films of examples 1-2 and comparative example 7 were filled with about 200 g of pork sausage meat of 50 wt% pork, 20 wt% fat, 6 wt% starch, 2 wt% salt and 22 wt% water, and both ends of each sausage

were clipped, thereby sausages of examples 1 and 2 and comparative example 7 were obtained. Each sausage was dried in a smoke chamber for 15 minutes at a temperature of 60°C and a relative humidity of 20%, and was thereafter smoked for 30 minutes at a temperature of 75°C and a relative humidity of 50%. The smokability of the films of examples 1 and 2 and comparative example 7 were examined by the above-described sensory examination (panel tests), the results being shown in Table 2.

On the other hand, PVDC-2 which is a copolymer of 95% by weight of vinylidene chloride and 5% by weight of methyl acrylate and Grilon® CF6S were dry blended in the weight ratio as shown in Table 2, thereafter a tubular stretched film having thickness of 30 μm was obtained according to the process of examples 1-2 (examples 3 - 6 and comparative example 8).

The sensory test for smokability, oxygen permeability coefficient and water vapor transmission rate were measured by the same method as that of examples 1 - 2. The results are shown in Table 2. For the comparative examples, films of a thickness of 30 μm of PVDC-1 (comparative example 2), PVDC-2 (comparative example 1), polyamide (comparative example 3), PA-1 (comparative example 4), PA-1/PVDC-1 = 20/80 (comparative example 5) and PA-1/PVDC-2 = 20/80 (comparative example 6) were used, and the same examination was carried out. The results are described in Table 2.

Further the evaluation of the samples by panelists in the sensory test of smokability is shown in Table 1.

The smoked taste and flavor of samples A and D was equal to that of S1 and S2 and thus samples A and D had an excellent smokability, and on the other hand, the smoked taste and flavor of samples B and C was equal to that of S4 and S5 and accordingly samples B and C had scarcely smokability.

The results were numerized with the above-mentioned formula (1) and are shown in Tables 1, 2 and 3.

On the other hand, the PVDC film has a low oxygen gas permeability coefficient and vapor transmission rate, but has scarcely smokability (comparative examples 1 and 2). Further, the polyamide film has a sufficient smokability but a high oxygen permeability coefficient and water vapor transmission rate (comparative example 3, 4). From this Table 2, it can be seen that the mixed resin of polyamide and PVDC containing polyamide 60-80% by weight has a low oxygen permeability coefficient and water vapor transmission rate and a practical smokability. Thus, the mixed resin is a very balanced package material.

**Examples 5 - 9**

The weight ratio of polyamide and PVDC-1 is 80:20 and polyamides of different sorts were used as shown in Table 3.

Each sample was dry-blended, and then the parison obtained by melt-extruding the mixed resin from extruder provided with a circular die was blown molded by an air pressure, thereby a stretched film of 30 μm in thickness was obtained. The oxygen permeability coefficient, the water vapor transmission rate and the smokability were measured and the results are shown in Table 3.

The smokability, oxygen permeability coefficient and water vapor transmission rate of the food package of the examples and comparative examples were compared respectively, while using the values of properties of PA-1 of comparative example 4 as the standard (100%). The result is shown in Fig. 1. Fig 1 shows that the smokability of the mixture of polyamide and PVDC in a scope of 60 to 80 wt% of polyamide equal to that of polyamide (PA-1), the oxygen permeability of the mixture decreases to less than 30% of PA-1 and the water vapor transmission rate of the mixture decreases to less than 15% of PA-1.

It ican be taken from Fig. 1 that the smokability, the oxygen permeability coefficient and the water transmission rate are well-balanced in the smoked food package which was packaged by the packaging material of the present invention and smoked.

Even if the kind of polyamide was changed, it was found from the Table 3 that the oxygen permeability coefficient and the water vapor transmission rate of the mixed resin were low and the smokability was sufficient and the mixed resin was a very balanced packaging material.

TABLE 1

| Example | PA-1/PVDC-1 | S1 | S2 | S3 | S4 | S5 | smokability |
|---|---|---|---|---|---|---|---|
| A | 80/20 | 8 | 2 | 0 | 0 | 0 | 99 |
| B | 40/60 | 0 | 0 | 1 | 4 | 5 | 7 |
| C | 20/80 | 0 | 0 | 1 | 0 | 9 | 3 |
| D | 60/40 | 5 | 5 | 0 | 0 | 0 | 99 |
| E | 100/0 | 9 | 1 | 0 | 0 | 0 | 99 |
| F | 0/100 | 0 | 0 | 0 | 1 | 9 | 1 |

**TABLE 2**

| | Material | Composition ratio, wt% | Sensory Test for Smokability | Oxygen Permeability Coefficient $m^3 \cdot m \cdot m^{-2} \cdot sec^{-1} \cdot Pa^{-1}$ (cc.cm/cm$^2$sec.cm Hg) | Water Vapor Transmission rate $kg \cdot m^{-2} \cdot sec^{-1}$ (g/m$^2$ day) |
|---|---|---|---|---|---|
| Comparative Example 1 | PVDC-2 | | 0 | $7.5 \times 10^{-24}$ ($1.0 \times 10^{-13}$) | $1.2 \times 10^{-8}$ (1) |
| Comparative Example 2 | PVDC-1 | | 1 | $5.2 \times 10^{-20}$ ($6.9 \times 10^{13}$) | $7.0 \times 10^{-8}$ (6) |
| Comparative Example 3 | Polyamide[*1] | | 100 | $2.3 \times 10^{-18}$ ($3.0 \times 10^{-11}$) | $1.7 \times 10^{-6}$ (150) |
| Comparative Example 4 | PA-1[*2] | | 99 | $1.7 \times 10^{-18}$ ($2.3 \times 10^{-11}$) | $2.3 \times 10^{-6}$ (200) |
| Example 1 | PA-1/PVDC-1 | 80/20 | 99 | $5.1 \times 10^{-19}$ ($6.8 \times 10^{-12}$) | $3.5 \times 10^{-7}$ (30) |
| Example 2 | PA-1/PVDC-1 | 60/40 | 99 | $2.8 \times 10^{-19}$ ($3.7 \times 10^{-12}$) | $1.7 \times 10^{-7}$ (15) |
| Comparative Example 7 | PA-1/PVDC-1 | 40/60 | 7 | $1.9 \times 10^{-19}$ ($2.5 \times 10^{-12}$) | $1.2 \times 10^{-7}$ (10) |
| Example 3 | PA-1/PVDC-2 | 80/20 | 99 | $4.0 \times 10^{-19}$ ($5.3 \times 10^{-12}$) | $2.3 \times 10^{-7}$ (20) |
| Example 4 | PA-1/PVDC-2 | 60/40 | 99 | $3.5 \times 10^{-20}$ ($4.6 \times 10^{-13}$) | $1.2 \times 10^{-7}$ (10) |
| Comparative Example 8 | PA-1/PVDC-2 | 40/60 | 7 | $2.2 \times 10^{-20}$ ($3.0 \times 10^{-13}$) | $5.8 \times 10^{-8}$ (5) |
| Comparative Example 5 | PA-1/PVDC-1 | 20/80 | 3 | $8.3 \times 10^{-20}$ ($1.1 \times 10^{-12}$) | $9.3 \times 10^{-8}$ (8) |
| Comparative Example 6 | PA-1/PVDC-2 | 20/80 | 3 | $1.2 \times 10^{-20}$ ($1.6 \times 10^{-13}$) | $1.3 \times 10^{-8}$ (2) |

[*1] Polyamide: Nylon 6 Tm = 223°C (Made by Toray Co., Amilan® CM-1021)

[*2] PA-1: Nylon 6-12 copolymer (Made by EMS CHEMIE AG Co., Grilon® CF CF6S)

EP 0 391 358 B1

**TABLE 3**

| | Material | Composition ratio, wt% | Sensory Test for Smokability | Oxygen Permeability Coefficient $m^3 \cdot m \cdot m^{-2} \cdot sec^{-1} \cdot Pa^{-1}$ (cc.cm/cm$^2$sec.cm Hg) | Water Vapor Transmission rate $kg \cdot m^{-2} \cdot sec^{-1}$ (g/m$^2$ day) |
|---|---|---|---|---|---|
| Example 5 | PA-2*/PVDC-1 | 80/20 | 99 | $6.8 \times 10^{-13}$ ($9.0 \times 10^{-12}$) | $4.6 \times 10^{-7}$ (40) |
| Example 6 | PA-3*2/PVDC-1 | 80/20 | 99 | $7.5 \times 10^{-13}$ ($1.0 \times 10^{-11}$) | $5.2 \times 10^{-7}$ (45) |
| Example 7 | PA-4*3/PVDC-1 | 80/20 | 99 | $6.5 \times 10^{-13}$ ($8.6 \times 10^{-12}$) | $5.8 \times 10^{-7}$ (50) |
| Example 8 | PA-5*4/PVDC-1 | 80/20 | 99 | $6.4 \times 10^{-13}$ ($8.5 \times 10^{-12}$) | $5.6 \times 10^{-7}$ (48) |
| Example 9 | PA-6*5/PVDC-1 | 80/20 | 99 | $5.3 \times 10^{-13}$ ($7.0 \times 10^{-12}$) | $5.0 \times 10^{-7}$ (43) |

*1: PA-2: Nylon 11, Tm = 190°C (made by ATOCHEM Co., Rilsan® BESV OA), Tg = 46°C

*2: PA-3: Nylon 12, Tm = 180°C (made by Ube Co., 3035 U). Tg = 42°C

*3: PA-4: Nylon 6-66 copolymer (Polymerization ratio = 80/20), Tm = 197°C (made by Toray Co., Amilan® CM 6041), Tg = 50°C

*4: PA-5: Nylon 6-12 copolymer (Polymerization ratio = 90/10), Tm = 204°C (made by EMS CHEMI AG Co., Grilon® CR 9), Tg = 44°C

*5: PA-6: Nylon 6-66-610 copolymer, Tm = 153°C (made by Toray Co., Amilan® CM 4000). Tg = 32°C

## Claims

1. A smoked food package produced by packaging a foodstuff with a smokable packaging material and smoking the packaged foodstuff, wherein the smokable packaging material comprises at least one layer

11

of a mixture of 20 to 40% by weight of vinylidene chloride resin which is a copolymer of 65 to 98 % by weight of vinylidene chloride with 2 to 35 % by weight of at least one copolymerizable monomer, and 60 to 80% by weight pf polyamide having a low crystalline melting point of not higher than 210 °C.

**2.** The smoked food package according to claim 1, wherein the smokable packaging material has an oxygen permeability coefficient of not more than 1.5 x $10^{-18}$ $m^3$ • m• $m^{-2}$• $sec^{-1}$• $Pa^{-1}$ (2,0 x $10^{-11}$ cc.cm/$cm^2$•sec•cmHg) at a temperature of 30°C and a relative humidity of 100%, and a water vapor transmission rate at a thickness of 30 $\mu$m of not more than 1.16 x $10^{-6}$ kg•$m^{-2}$• $sec^{-1}$ (100 g/$m^2$ • day) at a temperature of 40 °c and a relative humidity of 90%.

**3.** The smoked food package according to claim 1, wherein the smokable packaging material is a film, sheet or container.

**4.** A smoking process comprising packaging a foodstuff with a smokable film and smoking the packaged foodstuff wherein the smokable film comprises at least one layer of a mixture of 20 to 40% by weight of vinylidene chloride resin which is a copolymer of 65 to 98 % by weight of vinylidene chloride with 2 to 35% by weight of at least one copolymerizable monomer, and 60 to 80% by weight of polyamide having a low crystalline melting point of not higher than 210 °C.

**5.** The smoking process to claim 4, wherein the smokable packaging material has an oxygen permeability coefficient of not more than than 1.5 x $10^{-18}$ $m^3$ • m• $m^{-2}$• $sec^{-1}$• $Pa^{-1}$ (2,0 x $10^{-11}$ cc.cm/$cm^2$•sec•cmHg) at a temperature of 30 °C and a relative humidity of 100%, and a water vapor transmission rate at a thickness of 30 $\mu$m of not more than 1.16 x $10^{-6}$ kg•$m^{-2}$• $sec^{-1}$ (100 g/$m^2$ • day) at a temperature of 40 °C and a relative humidity of 90 %.

**6.** The smoking process according to claim 4, wherein the smokable packaging material is a film, sheet of container.

## Patentansprüche

**1.** Verpackung für geräucherte Lebensmittel, hergestellt durch Verpacken eines Lebensmittels mit einem räucherbaren Verpackungsmaterial und Räuchern des verpackten Lebensmittels, wobei das räucherbare Verpackungsmaterial mindestens eine Schicht aus einer Mischung aus 20 bis 40 Gew.-% eines Vinylidenchloridharzes, welches ein Copolymer aus 65 bis 98 Gew.-% Vinylidenchlorid mit 2 bis 35 Gew.-% mindestens eines damit copolymerisierbaren Monomeren ist, und 60 bis 80 Gew.-% eines Polyamids mit einem niedrigen Kristallschmelzpunkt von nicht höher als 210°C, umfaßt.

**2.** Verpackung für geräucherte Lebensmittel nach Anspruch 1, wobei das räucherbare Verpackungsmaterial einen Sauerstoff-Permeabilitätskoefflzienten von nicht mehr als 1,5 x $10^{-18}$ $m^3$•m•$m^{-2}$•$s^{-1}$• $Pa^{-1}$ (2,0 x $10^{-11}$ cc•cm/$cm^2$•sec•cmHg) bei einer Temperatur von 30°C und einer relativen Feuchtigkeit von 100 % sowie eine Wasserdampf-Übertragungsrate bei einer Dicke von 30 $\mu$m von nicht mehr 1,16 x $10^{-6}$ kg•$m^{-2}$•$s^{-1}$ (100 g/$m^2$•Tag) bei einer Temperaturvon 40°C und einer relativen Feuchtigkeit von 90 % aufweist.

**3.** Verpackung für geräucherte Lebensmittel nach Anspruch 1, wobei das räucherbare Verpackungsmaterial eine Folie, ein Blatt oder ein Behalterist.

**4.** Räucherverfahren, umfassend das Verpacken eines Lebensmittels mit einer räucherbaren Folie und das Räuchern des verpackten Lebensmittels, wobei die räucherbare Folie mindestens eine Schicht aus einer Mischung aus 20 bis 40 Gew.-% eines Vinylidenchloridharzes, welches ein Copolymer aus 65 bis 98 Gew.-% Vinylidenchlorid mit 2 bis 35 Gew.-% mindestens eines copolymerisierbaren Monomeren ist, und 60 bis 80 Gew.-% eines Polyamids mit einem niedrigen Kristallschmelzpunkt von nicht höher als 210°C, umfaßt.

**5.** Räucherverfahren nach Anspruch 4, wobei das räucherbare Verpackungsmaterial einen Sauerstoff-Permeabilitätskoeffizienten von nicht mehr als 1,5 x $10^{-18}$ $m^3$•m•$m^{-2}$•$s^{-1}$•$Pa^{-1}$ (2,0 x $10^{-11}$ cc•cm/$cm^2$•sec•cmHg) bei einer Temperatur von 30°C und einer relativen Feuchtigkeit von 100% und eine Wasserdampf-Übertragungsrate bei einer Dicke von 30 $\mu$m von nicht mehr 1,16 x $10^{-6}$

kg•m$^{-2}$•s$^{-1}$ (100 g/m$^2$•Tag) bei einer Temperatur von 40°C und einer relativen Feuchtigkeit von 90 % aufweist.

6. Räucherverfahren nach Anspruch 4, wobei das räucherbare Verpackungsmaterial eine Folie, ein Blatt oder ein Behälter ist.

**Revendications**

1. Emballage pour aliments fumés confectionné en emballant un aliment dans un matériau d'emballage apte au fumage que l'on fait fumer avec son contenu, dans lequel le matériau d'emballage en question comprend au moins une couche d'un mélange de 20 à 40 % en poids d'une résine de chlorure de vinylidène qui est un copolymère constitué de 65 à 98 % en poids de chlorure de vinylidène et de 2 à 35 % en poids d'au moins un monomère copolymérisable et de 60 à 80 % en poids de polyamide ayant un bas point de fusion cristalline non supérieur à 210°C.

2. Emballage pour aliments fumés selon la revendication 1, dans lequel le matériau d'emballage susceptible d'être fumé a un coefficient de perméabilité à l'oxygène non supérieur à 1,5X10$^{-18}$ m$^3$.mm$^{-2}$.sec$^{-1}$.Pa$^{-1}$ (2,0X10$^{-11}$ cc.cm/cm$^2$.sec.cm Hg) à une température de 30°C et sous une humidité relative de 100 %, et un taux de transmission de la vapeur à travers une épaisseur de 30 $\mu$m ne dépassant pas 1,16X10$^{-6}$ Kg.m$^{-2}$.sec$^{-1}$ (100g/m$^2$.jour) à une température de 40°C et sous une humidité relative de 90 %.

3. Emballage pour aliments fumés selon la revendication 1, dans lequel l'emballage en question est un film, une feuille ou un récipient.

4. Procédé de fumage comprenant l'emballage d'un aliment dans un film apte au fumage que l'on fait fumer avec son contenu dans lequel le film en question comprend au moins une couche d'un mélange de 20 à 40 % en poids d'une résine de chlorure de vinylidène et de 2 à 35 % en poids d'au moins un monomère copolymérisable, et de 60 à 80 % en poids de polyamide ayant un bas point de fusion cristalline ne dépassant pas 210°C.

5. Procédé de fumage selon la revendication 4, dans lequel le matériau d'emballage susceptible d'être fumé possède un coefficient de perméabilité à l'oxygène ne dépassant pas 1,5X10$^{-18}$ m$^3$•mm.sec.Pa$^{-1}$ (2,0 X 10-11 cc.cm/cm$^2$.sec.cm Hg) à une température de 30°C et sous une humidité relative de 100 % et un taux de transmission de la vapeur à travers une épaisseur de 30 $\mu$m n'excédant pas 1,16X10$^{-6}$ Kg.m$^{-2}$.sec.(100 g/m$^2$.jour) à une température de 40°C et sous une humidité relative de 90

6. Procédé de fumage selon la revendication 4, dans lequel le matériau d'emballage susceptible d'être fumé est un film, une feuille ou un récipient.

# Fig.1